# EUROPEAN PATENT APPLICATION

(11) **EP 4 414 775 A1**
(43) Date of publication of application: **14.08.2024**
(21) Application number: 24156434.3
(22) Date of filing: 07.02.2024
(51) Int. Cl.: G02F 1/065, G02F 1/225, G02B 6/26, G02B 6/122, G02B 6/30

(54) **OPTICAL DEVICE, OPTICAL MODULE, AND OPTICAL TRANSCEIVER**

(30) Priority: 10.02.2023 JP 2023019308
(71) Applicant: Fujitsu Optical Components Limited, Kanagawa 211-8588 (JP)
(72) Inventor: MITAMURA, Nobuaki, Kawasaki-shi, 211-8588 (JP); SATO, Kazumasa, Kawasaki-shi, 211-8588 (JP)
(74) Representative: Haseltine Lake Kempner LLP

(57) **Abstract**

An optical device has an optical modulator element and an optical receiver element. The optical modulator element includes a first optical waveguide extending to a first end face, a first inter-element waveguide extending to a second end face, and an optical modulator including an electro-optic material. The optical receiver element includes a second optical waveguide extending to a third end face, a second inter-element waveguide extending to a fourth end face, an optical receiver, and a polarization element. In the optical device, the first inter-element waveguide and the second inter-element waveguide have been connected to each other by being butted against each other.

## Description

### FIELD

The embodiments discussed herein are related to optical devices, optical modules, and optical transceivers.

### BACKGROUND

Due to the rapid increase in the communication volume of Internet Protocol (IP) data, for example, there has been a demand for increase in the capacity of optical networks. In addition, further downsizing and integration of optical transmitters and receivers have been desired for higher housing efficiency of spaces in optical transceivers. Light is highly confined in silicon (Si) waveguides used in optical transceivers, bending radii of Si waveguides can thus be reduced to about 10 µm, and Si photonic elements have thus started to be applied to optical transmitters and optical receivers having a baud rate of 64 Gbaud/second.

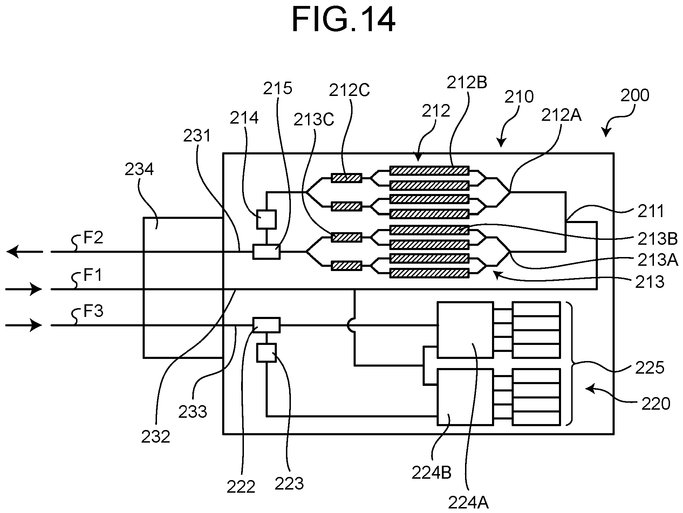

FIG. 14 is a schematic plan view of an example of a conventional optical device 200. The optical device 200 illustrated in FIG. 14 is, for example, a dual polarization-quadrature phase shift keying (DP-QPSK) optical device having a baud rate of 64 Gbaud/second. The optical device 200 has an optical modulator element 210 and an optical receiver element 220. The optical modulator element 210 and the optical receiver element 220 are Si photonic elements. The optical device 200 has a transmission optical waveguide 231, a local optical waveguide 232, and a reception optical waveguide 233.

The local optical waveguide 232 is an optical waveguide that is optically connected, by butt joint coupling, to a local optical fiber F1 via a glass block 234 and that guides local light therethrough. The transmission optical waveguide 231 is an optical waveguide optically connected, by butt joint coupling, to an output optical fiber F2 via the glass block 234 and that guides transmitted light therethrough. The reception optical waveguide 233 is an optical waveguide that is optically connected, by butt joint coupling, to an input optical fiber F3 via the glass block 234 and that guides received light therethrough.

The optical receiver element 220 has a polarization beam splitter (PBS) 222 and a first polarization rotator (PR) 223. The optical receiver element 220 also has a first optical hybrid circuit 224A, a second optical hybrid circuit 224B, and first to fourth photodiodes (PDs) 225.

The PBS 222 separates the received light input from the reception optical waveguide 233 into two orthogonal polarization states, for example, an X polarization component and a Y polarization component. The X polarization component is a horizontal polarization component, and the Y polarization component is a vertical polarization component. The PBS 222 outputs the separated X polarization component to the first optical hybrid circuit 224A. Furthermore, the first PR 223 causes polarization rotation of the Y polarization component from the PBS 222 by 90 degrees and outputs the Y polarization component that has been subjected to the polarization rotation, to the second optical hybrid circuit 224B.

The first optical hybrid circuit 224A causes local light to interfere with the X polarization component of the received light and thereby obtains I component and Q component optical signals. The I component is an in-phase axis component, and the Q component is a quadrature axis component. The first optical hybrid circuit 224A outputs the I component optical signal of the X polarization component, to the first PD 225. The first optical hybrid circuit 224A outputs the Q component optical signal of the X polarization component, to the second PD 225.

The second optical hybrid circuit 224B causes local light to interfere with the Y polarization component that has been subjected to the polarization rotation and thereby obtains I component and Q component optical signals. The second optical hybrid circuit 224B outputs the I component optical signal of the Y polarization component, to the third PD 225. The second optical hybrid circuit 224B outputs the Q component optical signal of the Y polarization component, to the fourth PD 225.

The first PD 225 performs gain adjustment of the I component optical signal of the X polarization component from the first optical hybrid circuit 224A by electric conversion and outputs an electric signal resulting from the gain adjustment. The second PD 225 performs gain adjustment of the Q component optical signal of the X polarization component from the first optical hybrid circuit 224A by electric conversion and outputs an electric signal resulting from the gain adjustment.

The third PD 225 performs gain adjustment of the I component optical signal of the Y polarization component from the second optical hybrid circuit 224B by electric conversion and outputs an electric signal resulting from the gain adjustment. The fourth PD 225 performs gain adjustment of the Q component optical signal of the Y polarization component from the second optical hybrid circuit 224B by electric conversion and outputs an electric signal resulting from the gain adjustment.

The optical modulator element 210 has a first branch portion 211, an X polarization modulator 212, a Y polarization modulator 213, a second PR 214, and a polarization beam combiner (PBC) 215. The first branch portion 211 branches and outputs an optical signal of local light to the X polarization modulator 212 and the Y polarization modulator 213.

The X polarization modulator 212 has a second branch portion 212A, two DC slave Mach-Zehnder modulators (MZMs) 212B, and one DC master MZM 212C. The second branch portion 212A branches and outputs an optical signal from the first branch portion 211 to each of the DC slave MZMs 212B in the X polarization modulator 212. One of the DC slave MZMs 212B in the X polarization modulator 212 performs phase modulation of an X polarized I component optical signal according to an electric signal from a DC electrode and outputs the I component optical signal that has been subjected to the phase modulation, to the DC master MZM 212C. The other one of the DC slave MZMs 212B in the X polarization modulator 212 performs phase modulation of an X polarized Q component optical signal according to an electric signal from a DC electrode and outputs the Q component optical signal that has been subjected to the phase modulation, to the DC master MZM 212C.

The DC master MZM 212C in the X polarization modulator 212 performs, according to a driving voltage signal: quadrature modulation of the X polarized I component signal light that has been subjected to the phase modulation; and quadrature modulation of the X polarized Q component signal light that has been subjected to the phase modulation. Furthermore, the DC master MZM 212C obtains the X polarized I component signal light that has been subjected to the quadrature modulation and the X polarized Q component signal light that has been subjected to the quadrature modulation. The DC master MZM 212C then performs multiplexing of the X polarized I component optical signal and the X polarized Q component optical signal and outputs an X polarized optical signal resulting from the multiplexing, to the PBC 215.

The Y polarization modulator 213 has a second branch portion 213A, two DC slave MZMs 213B, and one DC master MZM 213C. The second branch portion 213A branches and outputs an optical signal from the first branch portion 211 to each of the DC slave MZMs 213B in the Y polarization modulator 213. One of the DC slave MZMs 213B in the Y polarization modulator 213 performs phase modulation of a Y polarized I component optical signal according to an electric signal from a DC electrode and outputs the I component optical signal that has been subjected to the phase modulation, to the DC master MZM 213C. The other one of the DC slave MZMs 213B in the Y polarization modulator 213 performs, according to an electric signal from a DC electrode, phase modulation of a Y polarized Q component optical signal that has been subjected to optical modulation and outputs the Q component optical signal that has been subjected to the phase modulation, to the DC master MZM 213C in the Y polarization modulator 213.

The DC master MZM 213C in the Y polarization modulator 213 performs, according to a driving voltage signal: quadrature modulation of the Y polarized I component signal light that has been subjected to the phase modulation; and quadrature modulation of the Y polarized Q component signal light that has been subjected to the phase modulation. The DC master MZM 212C obtains the Y polarized I component signal light that has been subjected to the quadrature modulation and the Y polarized Q component signal light that has been subjected to the quadrature modulation. The DC master MZM 213C performs multiplexing of the Y polarized I component optical signal and the Y polarized Q component optical signal and outputs a Y polarized optical signal resulting from the multiplexing, to the second PR 214.

By causing polarization rotation of the Y polarized optical signal by 90 degrees, the second PR 214 outputs the Y polarized optical signal that has been subjected to the polarization rotation, to the PBC 215. The PBC 215 performs multiplexing of the X polarized optical signal from the DC master MZM 212C in the X polarization modulator 212 and the Y polarized optical signal that has been subjected to the polarization rotation by the second PR 214, and outputs an optical signal resulting from the multiplexing, from the transmission optical waveguide 231.

The optical device 200 has an optical circuit including a Si waveguide manufactured by use of a siliconon-insulator (SOI) wafer and is thus also called a Si photonic element. The optical modulator element 210 and the optical receiver element 220 in the optical device 200 are connected to each other by an optical waveguide. Si photonic elements achieve economies of scale and low cost because large numbers of Si photonic elements can be manufactured collectively by utilization of process technologies and process facilities for Si electric semiconductor elements and use of Si wafers having a large area, for example, 8-inch to 12-inch Si wafers.

Many wide band Ge doped PDs having a baud rate of 96 Gbaud/second or higher for ultrahigh speed uses of a baud rate of 96 Gbaud/second or higher have been reported at academic conferences, for example. Furthermore, polarization elements, such as PBCs, PBSs, and PRs, are not dependent on baud rates and polarization elements that have already been put to practical use at a baud rate of 64 Gbaud/second can be used as is also at a baud rate of 96 Gbaud/second or higher. That is, as to PDs and polarization elements, Si photonic elements can be used for optical devices for uses at an ultrahigh speed of a baud rate of 96 Gbaud/second or higher.
Patent Literature 1: Japanese Laid-open Patent Publication No. 09-61652
Patent Literature 2: Japanese Laid-open Patent Publication No. 2007-264470
Patent Literature 3: U.S. Patent No. 10684414
Patent Literature 4: U.S. Patent No. 9780530

However, instead of metal electrodes, Si electrodes doped with impurities are used in Si modulators, such as the X polarization modulator 212 and Y polarization modulator 213 in the optical modulator element 210 in the conventional optical device 200, and these Si electrodes are higher in electric resistance than the metal electrodes. What is more, optical waveguides used in Si modulators have PiN junction structures and are thus large in capacity and large in high frequency loss. Therefore, in a case where driving at a driving voltage (±2 V or 4 V or less) of a practical driver is assumed, achieving a wider bandwidth of 50 GHz or wider and a higher baud rate of 96 Gbaud/second or higher is difficult.

Many attempts to integrate an electro-optic material, such as LiNbO₃, onto a Si photonic element have thus also been reported at academic conferences, for example, the electric optical material having an electro-optic effect and being said to achieve a higher baud rate of 96 Gbaud/second or higher. However, the technical hurdles for the integration process are very high and the attempts have not been put to practical use yet.

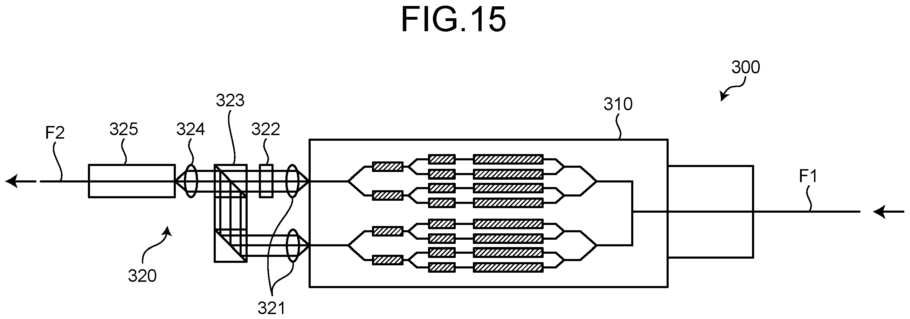

FIG. 15 is a schematic diagram illustrating an example of a conventional optical modulator element 300. The optical modulator element 300 illustrated in FIG. 15 has an optical modulator having an optical waveguide using LiNbO₃ having an electro-optic effect. The optical modulator element 300 has an optical component 320 between an optical modulator 310 and an output optical fiber F2. The optical component 320 includes two collimator lenses 321, a PR 322, a PBC 323, a condenser lens 324, and a glass block 325. The optical component 320 couples the optical modulator 310 in the optical modulator element 300 and the output optical fiber F2 to each other by use of the two collimator lenses 321 and condenser lens 324 by means of collimated beams. The PR 322 and PBC 323 in the optical component 320 are of the bulk-type.

However, the use of the two collimator lenses 321 and condenser lens 324 in the optical modulator element 300 having the optical modulator 310 having the optical waveguide using LiNbO₃ is a limiting factor for downsizing of the optical modulator element 300. Therefore, there is a demand for an optical device having an optical modulator element and an optical receiver element optically connected to each other, the optical modulator element using an electro-optic material that improves properties, the optical receiver element being a Si photonic element favorable to downsizing.

Accordingly, it is desirable to provide, for example, an optical device that enables downsizing while improving properties.

### SUMMARY

According to an aspect of an embodiment, an optical device includes an optical modulator element and an optical receiver element. The optical modulator element includes a first optical waveguide extending to a first end face, a first inter-element waveguide extending to a second end face, and an optical modulator including an electro-optic material. The optical receiver element includes a second optical waveguide extending to a third end face, a second inter-element waveguide extending to a fourth end face, an optical receiver, and a polarization element. The first inter-element waveguide and the second inter-element waveguide have been connected to each other by being butted against each other.

### BRIEF DESCRIPTION OF DRAWINGS

The invention is described, by way of example only, with reference to the following drawings, in which:
FIG. 1 is a schematic plan view of an example of an optical device according to a first embodiment;
FIG. 2 is a diagram illustrating an example of a method of optically connecting an optical modulator element and a local optical fiber to each other;
FIG. 3 is a diagram illustrating an example of a method of optically connecting an optical receiver element to an output optical fiber and an input optical fiber;
FIG. 4 is a diagram illustrating an example of a method of optically connecting the optical modulator element and the optical receiver element to each other;
FIG. 5 is a diagram illustrating an example of a method of optically connecting an optical receiver element to an output optical fiber and an input optical fiber;
FIG. 6 is a diagram illustrating an example of a junction of an inter-element waveguide in the optical modulator element and an inter-element waveguide in the optical receiver element;
FIG. 7 is a diagram illustrating an example of a junction of a local optical waveguide and the local optical fiber, a junction of a transmission optical waveguide and the output optical fiber, and a junction of a reception optical waveguide and the input optical fiber;
FIG. 8 is a schematic plan view of an example of an optical device according to a second embodiment;
FIG. 9 is a schematic plan view of an example of an optical device according to a third embodiment;
FIG. 10 is a diagram illustrating an example of a method of optically connecting an optical modulator element and an optical fiber array to each other;
FIG. 11 is a diagram illustrating an example of a method of optically connecting the optical modulator element and an optical receiver element to each other;
FIG. 12 is a schematic plan view of an example of an optical device according to a fourth embodiment;
FIG. 13 is a block diagram illustrating an example of an optical transceiver according to an embodiment;
FIG. 14 is a schematic plan view of an example of a conventional optical device; and
FIG. 15 is a schematic diagram illustrating an example of a conventional optical modulator element.

### DESCRIPTION OF EMBODIMENTS

Preferred embodiments of the present invention will be explained with reference to accompanying drawings. The present invention is not to be limited by these embodiments. Furthermore, the following embodiments may be combined with one another as appropriate so long as no contradiction is caused by the combination.

### (a) First Embodiment

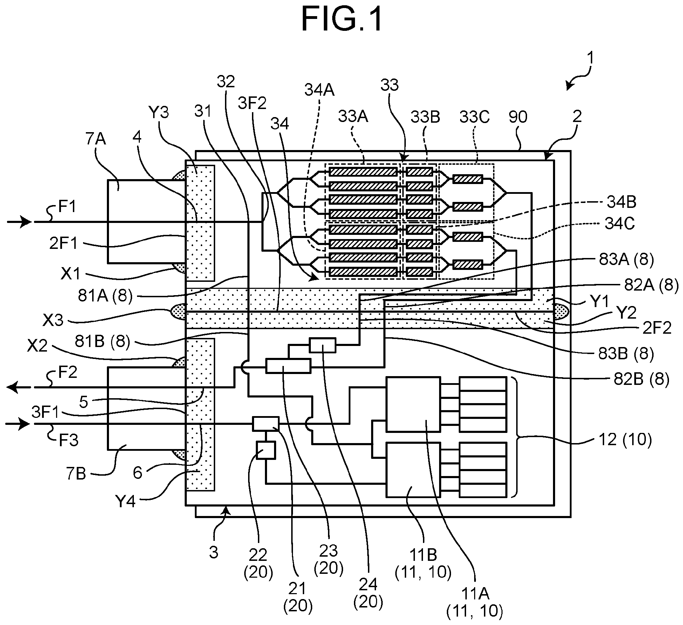

FIG. 1 is a schematic plan view of an example of an optical device according to a first embodiment. An optical device 1 illustrated in FIG. 1 is, for example, a dual polarization-quadrature phase shift keying (DP-QPSK) optical device having a baud rate of 96 Gbaud/second. The optical device 1 has an optical modulator element 2 including an electro-optic material, and an optical receiver element 3 that is a Si photonic element. The optical device 1 also has a local optical waveguide 4, a transmission optical waveguide 5, a reception optical waveguide 6, glass blocks 7A and 7B, and an inter-element waveguide 8.

The local optical waveguide 4 is an optical waveguide that is optically connected to a local optical fiber F1 via the glass block 7A by butt joint coupling and that guide local light therethrough. The transmission optical waveguide 5 is an optical waveguide that is optically connected to an output optical fiber F2 via the glass block 7B by butt joint coupling and that guides transmitted light therethrough. The reception optical waveguide 6 is an optical waveguide that is optically connected to an input optical fiber F3 via the glass block 7B by butt joint coupling and that guides received light therethrough. The inter-element waveguide 8 is an optical waveguide that optically connects the optical modulator element 2 and the optical receiver element 3 to each other by butt joint coupling.

The optical receiver element 3 has an optical receiver 10 and a polarization element 20. The optical receiver element 3 is a Si photonic element on a Si substrate 90, the Si photonic element having a waveguide including Si or Ge, for example. The optical receiver 10 has a first optical hybrid circuit 11A, a second optical hybrid circuit 11B, and first to fourth photodiodes (PDs) 12. The polarization element 20 has a polarization beam splitter (PBS) 21, a first polarization rotator (PR) 22, a polarization beam combiner (PBC) 23, and a second PR 24. The optical receiver element 3 has a third end face 3F1 and a fourth end face 3F2. The optical receiver element 3 has the reception optical waveguide 6 and the transmission optical waveguide 5 that extend to the third end face 3F1, and the inter-element waveguide 8 that extends to the fourth end face 3F2. The inter-element waveguide 8 in the optical receiver element 3 is, for example, a second inter-element waveguide having a local inter-element waveguide 81B, an X polarization inter-element waveguide 82B, and a Y polarization inter-element waveguide 83B.

The glass block 7B having the input optical fiber F3 and output optical fiber F2 embedded therein is joined to the third end face 3F1 of the optical receiver element 3. As a result, the reception optical waveguide 6 is optically connected, by butt joint coupling, to the input optical fiber F3 where received light is input from. Furthermore, the transmission optical waveguide 5 is optically connected, by butt joint coupling, to the output optical fiber F2 where transmitted light is output to.

The local inter-element waveguide 81B is an inter-element waveguide that guides local light from the optical modulator element 2. The X polarization inter-element waveguide 82B is an inter-element waveguide that guides X polarization component signal light from the optical modulator element 2. The Y polarization inter-element waveguide 83B is an inter-element waveguide that guides Y polarization component signal light from the optical modulator element 2.

The PBS 21 separates received light input from the reception optical waveguide 6 into two orthogonal polarization states, for example, X polarization component and Y polarization component optical signals. The X polarization component is a horizontal polarization component, and the Y polarization component is a vertical polarization component. The PBS 21 outputs the separated X polarization component optical signal to the first optical hybrid circuit 11A. Furthermore, the first PR 22 causes polarization rotation of the separated Y polarization component optical signal by 90 degrees to convert the separated Y polarization component optical signal into a Y polarization component optical signal resulting from the polarization rotation, and outputs the Y polarization component optical signal resulting from the polarization rotation, to the second optical hybrid circuit 11B.

The first optical hybrid circuit 11A converts the phase state of an optical signal to an optical intensity by using local light. By causing the local light to interfere with an X polarization component optical signal, the first optical hybrid circuit 11A obtains I component and Q component optical signals of the X polarization component. The I component is an in-phase axis component, and the Q component is a quadrature axis component. The first optical hybrid circuit 11A outputs the I component optical signal of the X polarization component, to the first PD 12. The first optical hybrid circuit 11A outputs the Q component optical signal of the X polarization component, to the second PD 12.

The second optical hybrid circuit 11B converts the phase state of an optical signal to an optical intensity by using local light. By causing the local light to interfere with a Y polarization component that has been subjected to polarization rotation, the second optical hybrid circuit 11B obtains I component and Q component optical signals of the Y polarization component. The second optical hybrid circuit 11B outputs the I component optical signal of the Y polarization component, to the third PD 12. The second optical hybrid circuit 11B outputs the Q component optical signal of the Y polarization component, to the fourth PD 12.

The first PD 12 performs gain adjustment of the I component optical signal of the X polarization component from the first optical hybrid circuit 11A by electric conversion of the I component optical signal of the X polarization component and outputs an electric signal resulting from the gain adjustment. The second PD 12 performs gain adjustment of the Q component optical signal of the X polarization component from the first optical hybrid circuit 11A by electric conversion of the Q component optical signal of the X polarization component and outputs an electric signal resulting from the gain adjustment.

The third PD 12 performs gain adjustment of the I component optical signal of the Y polarization component from the second optical hybrid circuit 11B by electric conversion of the I component optical signal of the Y polarization component and outputs an electric signal resulting from the gain adjustment. The fourth PD 12 performs gain adjustment of the Q component optical signal of the Y polarization component from the second optical hybrid circuit 11B by electric conversion of the Q component optical signal of the Y polarization component and outputs an electric signal resulting from the gain adjustment.

The local inter-element waveguide 81B is an inter-element waveguide that is optically connected to a later described local inter-element waveguide 81A at the optical modulator element 2 by butt joint coupling, that guides local light therethrough, and that is at the optical receiver element 3. The X polarization inter-element waveguide 82B is an inter-element waveguide that is optically connected to a later described X polarization inter-element waveguide 82A at the optical modulator element 2 by butt joint coupling, that guides an X polarization component optical signal therethrough, and that is at the optical receiver element 3. The Y polarization inter-element waveguide 83B is an inter-element waveguide that is optically connected to a later described Y polarization inter-element waveguide 83A at the optical modulator element 2 by butt joint coupling, that guides a Y polarization component optical signal therethrough, and that is at the optical receiver element 3.

The second PR 24 causes polarization rotation of a Y polarized optical signal from the optical modulator element 2 by 90 degrees, the Y polarized optical signal having been received through the Y polarization inter-element waveguide 83B, and outputs a Y polarization component optical signal resulting from the polarization rotation, to the PBC 23. The PBC 23 performs polarization multiplexing of the X polarization component optical signal from the optical modulator element 2 and the Y polarization component optical signal from the second PR 24, the X polarization component optical signal having been received through the X polarization inter-element waveguide 82B, the Y polarization component optical signal having been subjected to the polarization rotation by 90 degrees, and outputs an optical signal resulting from the polarization multiplexing, to the transmission optical waveguide 5.

The optical modulator element 2 has a first branch portion 31, a second branch portion 32, an X polarization modulator 33, and a Y polarization modulator 34. The optical modulator element 2 has a first end face 2F1 and a second end face 2F2. The optical modulator element 2 has the local optical waveguide 4 extending to the first end face 2F1 and the inter-element waveguide 8 extending to the second end face 2F2. The glass block 7A having the local optical fiber F1 embedded therein is joined to the first end face 2F1 of the optical modulator element 2 and the local optical waveguide 4 is thereby optically connected to the local optical fiber F1 by butt joint coupling. The inter-element waveguide 8 in the optical modulator element 2 is, for example, a first inter-element waveguide having the local inter-element waveguide 81A, the X polarization inter-element waveguide 82A, and the Y polarization inter-element waveguide 83A.

The local inter-element waveguide 81A is an inter-element waveguide that is optically connected to the local inter-element waveguide 81B at the optical receiver element 3 by butt joint coupling, that guides local light therethrough, and that is at the optical modulator element 2. The X polarization inter-element waveguide 82A is an inter-element waveguide that is optically connected to the X polarization inter-element waveguide 82B at the optical receiver element 3 by butt joint coupling, that guides an X polarization component optical signal therethrough, and that is at the optical modulator element 2. The Y polarization inter-element waveguide 83A is an inter-element waveguide that is optically connected to the Y polarization inter-element waveguide 83B at the optical receiver element 3, that guides a Y polarization component optical signal therethrough, and that is at the optical modulator element 2.

The first branch portion 31 branches and outputs an optical signal of local light from the local optical waveguide 4, to the second branch portion 32 and the local inter-element waveguide 81A. The second branch portion 32 branches and outputs the local light from the first branch portion 31 to the X polarization modulator 33 and the Y polarization modulator 34.

The X polarization modulator 33 is, for example, an optical modulator having two RF MZMs 33A, two DC slave MZMs 33B, and one DC master MZM 33C. The RF MZMs 33A are, for example, optical phase modulators that perform phase modulation of signal light. The DC slave MZMs 33B and the DC master MZM 33C are, for example, optical phase adjusters that adjust phases of the signal light that has been subjected to the phase modulation. One of the RF MZMs 33A in the X polarization modulator 33 performs optical modulation of an X polarized I component of an optical signal according to an electric signal from an RF electrode. One of the DC slave MZMs 33B in the X polarization modulator 33 performs phase modulation of the I component optical signal that has been subjected to the optical modulation, according to an electric signal from a DC electrode, and outputs the I component optical signal that has been subjected to the phase modulation, to the DC master MZM 33C.

The other one of the RF MZMs 33A in the X polarization modulator 33 performs optical modulation of an X polarized Q component of the optical signal according to an electric signal from an RF electrode. The other one of the DC slave MZMs 33B in the X polarization modulator 33 performs phase modulation of the Q component optical signal that has been subjected to the optical modulation, according to an electric signal from a DC electrode, and outputs the Q component optical signal that has been subjected to the phase modulation, to the DC master MZM 33C.

The DC master MZM 33C in the X polarization modulator 33 performs, according to a driving voltage signal, quadrature modulation of the X polarized I component signal light that has been subjected to the phase modulation and performs quadrature modulation of the X polarized Q component signal light that has been subjected to the phase modulation. The DC master MZM 33C obtains the X polarized I component signal light that has been subjected to the quadrature modulation and the X polarized Q component signal light that has been subjected to the quadrature modulation. The DC master MZM 33C performs multiplexing of the X polarized I component optical signal and the X polarized Q component optical signal and outputs an X polarized optical signal resulting from the multiplexing, to the X polarization inter-element waveguide 82A. The X polarization component optical signal is then input to the PBC 23 in the optical receiver element 3 via the X polarization inter-element waveguide 82B.

The Y polarization modulator 34 is, for example, an optical modulator having two RF MZMs 34A, two DC slave MZMs 34B, and one DC master MZM 34C. The RF MZMs 34A are, for example, optical phase modulators that perform phase modulation of signal light. The DC slave MZMs 34B and DC master MZM 34C are, for example, optical phase adjusters that adjust phases of the signal light that has been subjected to the phase modulation. One of the RF MZMs 34A in the Y polarization modulator 34 performs optical modulation of the Y polarized I component of the optical signal, according to an electric signal from an RF electrode. One of the DC slave MZMs 34B in the Y polarization modulator 34 performs, according to an electric signal from a DC electrode, phase modulation of the I component optical signal that has been subjected to the optical modulation, and outputs the I component optical signal that has been subjected to the phase modulation, to the DC master MZM 34C.

The other one of the RF MZMs 34A in the Y polarization modulator 34 performs optical modulation of the Y polarized Q component of the optical signal, according to an electric signal from an RF electrode. The other one of the DC slave MZMs 34B in the Y polarization modulator 34 performs, according to an electric signal from a DC electrode, phase modulation of the Q component optical signal that has been subjected to the optical modulation, and outputs the Q component optical signal that has been subjected to the phase modulation, to the DC master MZM 34C in the Y polarization modulator 34.

The DC master MZM 34C in the Y polarization modulator 34 performs, according to a driving voltage signal, quadrature modulation of the Y polarized I component signal light that has been subjected to the phase modulation and quadrature modulation of the Y polarized Q component signal light that has been subjected to the phase modulation. The DC master MZM 34C obtains Y polarized I component signal light resulting from the quadrature modulation, and Y polarized Q component signal light resulting from the quadrature modulation of the Y polarized Q component signal light that has been subjected to the phase modulation. The DC master MZM 34C performs multiplexing of the Y polarized I component optical signal and the Y polarized Q component optical signal and outputs a Y polarized optical signal resulting from the multiplexing, to the Y polarization inter-element waveguide 83B. The Y polarization component optical signal is then input to the second PR 24 in the optical receiver element 3 via the Y polarization inter-element waveguide 83B.

Joining the third end face 3F1 of the optical receiver element 3 and the glass block 7B to each other optically couples the input optical fiber F3 and the reception optical waveguide 6 to each other by butt joint coupling and optically couples the output optical fiber F2 and the transmission optical waveguide 5 to each other by butt joint coupling. Joining the first end face 2F1 of the optical modulator element 2 and the glass block 7A to each other optically connects the local optical fiber F1 and the local optical waveguide 4 to each other by butt joint coupling.

Between the second end face 2F2 of the optical modulator element 2 and the fourth end face 3F2 of the optical receiver element 3, the local inter-element waveguides 81A and 81B are optically connected to each other by butt joint coupling, the X polarization inter-element waveguides 82A and 82B are optically connected to each other by butt joint coupling, and the Y polarization inter-element waveguides 83A and 83B are optically connected to each other by butt joint coupling. In a state where the optical modulator element 2 and the optical receiver element 3 have been optically connected to each other, the first end face 2F1 and the third end face 3F1 are coplanar with each other.

Examples of the electro-optic material that may be used for the optical modulator element 2 include perovskite-type oxides. Examples of the perovskite-type oxides that may be used include (Pb) (Zr,Ti)O₃ (hereinafter, PZT), (Pb, La) (Zr,Ti)0₃ (hereinafter, PLZT), BaTiOs (hereinafter, BTO), (Sr,Ba)TiO₃ (hereinafter, SBT), and LiNbO₃ (hereinafter, LN). However, any other perovskite- type oxide having an electro-optic effect may be used instead. A substrate used for the optical modulator element 2 is not limited, but in a case where a Si substrate 90 that is the same as that for the optical receiver element 3 is used, the optical modulator element 2 and the optical receiver element 3 will have the same thermal expansion coefficient, and changes in properties, such as insertion loss due to the temperature after the butt joint coupling, will thus be able to be reduced.

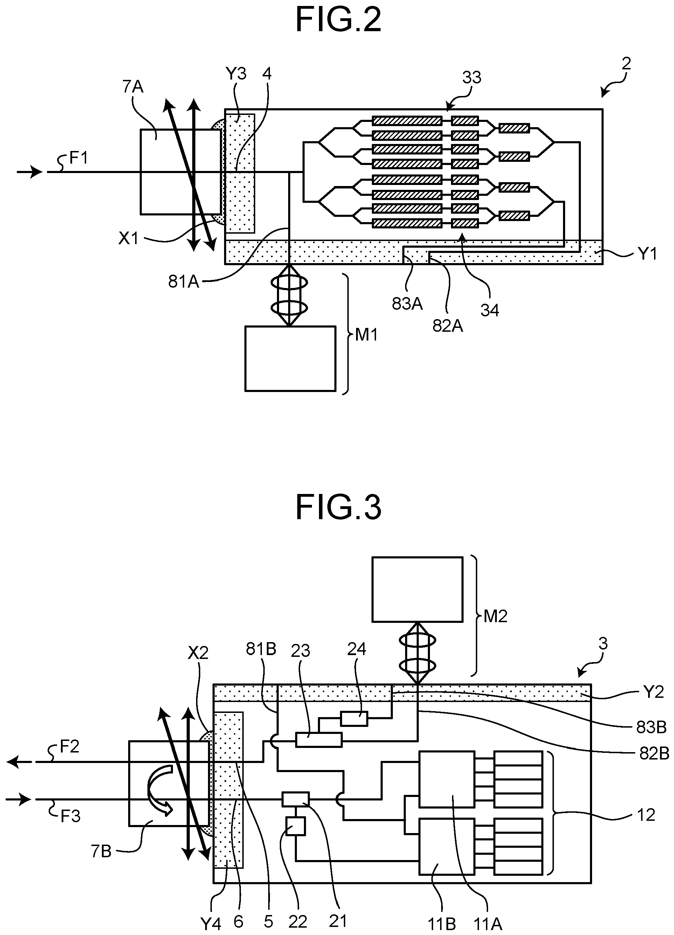

A method of manufacturing the optical device according to the first embodiment will be described next. A method of optically connecting the optical modulator element 2 and the local optical fiber F1 to each other will be described first. FIG. 2 is a diagram illustrating an example of the method of optically connecting the optical modulator element 2 and the local optical fiber F1 to each other. A fixture Y1 is arranged on and adhered to the local inter-element waveguide 81A, the X polarization inter-element waveguide 82A, and the Y polarization inter-element waveguide 83A that are near the second end face 2F2 of the optical modulator element 2. Furthermore, a fixture Y3 is arranged on and adhered to the local optical waveguide 4 that is near the first end face 2F1 of the optical modulator element 2. The first end face 2F1 and second end face 2F2 of the optical modulator element 2 are cut and polished and end faces of the local inter-element waveguide 81A, the X polarization inter-element waveguide 82A, the Y polarization inter-element waveguide 83A, and the local optical waveguide 4 are thereby formed into optical surfaces. Furthermore, an end face of the glass block 7A having the local optical fiber F1 embedded therein is polished so that an end face of the local optical fiber F1 is formed into an optical surface.

Subsequently, an optical power meter M1 that condenses and receives light output from the end face of the local inter-element waveguide 81A is placed near the end face of the local inter-element waveguide 81A of the optical modulator element 2, the optical power meter M1 having a lens and a large aperture. Subsequently, a UV adhesive X1 is applied between the local optical waveguide 4 of the optical modulator element 2 and the end face of the glass block 7A having the local optical fiber F1 embedded therein, and the glass block 7A is then brought into contact with the first end face 2F1. Alignment of the optical axis of the local optical fiber F1 is then performed while local light is input from the local optical fiber F1, so that optical input power at the optical power meter M1 is maximized. Irradiating the UV adhesive X1 with UV light after the alignment of the optical axis optically connects and adhesively fixes the local optical fiber F1 and the local optical waveguide 4 of the optical modulator element 2 to each other.

A method of optically connecting the optical receiver element 3 to the input optical fiber F3 and output optical fiber F2 will be described next. FIG. 3 is a diagram illustrating an example of the method of optically connecting the optical receiver element 3 to the output optical fiber F2 and input optical fiber F3. A fixture Y2 is arranged on and adhered to the local inter-element waveguide 81B, X polarization inter-element waveguide 82B, and Y polarization inter-element waveguide 83B that are near the fourth end face 3F2 of the optical receiver element 3. Furthermore, a fixture Y4 is arranged on and adhered to the transmission optical waveguide 5 and the reception optical waveguide 6 that are near the third end face 3F1 of the optical receiver element 3. The third end face 3F1 and fourth end face 3F2 of the optical receiver element 3 are then cut and polished, and end faces of the local inter-element waveguide 81B, the X polarization inter-element waveguide 82B, the Y polarization inter-element waveguide 83B, the transmission optical waveguide 5, and the reception optical waveguide 6 are thereby formed into optical surfaces. Furthermore, an end face of the glass block 7B having the output optical fiber F2 and input optical fiber F3 embedded therein is polished so that end faces of the output optical fiber F2 and input optical fiber F3 are formed into optical surfaces. The glass block 7B has the output optical fiber F2 and input optical fiber F3 embedded therein at positions where the transmission optical waveguide 5 and the output optical fiber F2 are optically connected to each other and the reception optical waveguide 6 and the input optical fiber F3 are optically connected to each other.

Subsequently, an optical power meter M2 that condenses and receives light output from the end face of the X polarization inter-element waveguide 82B is placed near the end face of the X polarization inter-element waveguide 82B of the optical receiver element 3, the optical power meter M2 having a lens and a large aperture. Subsequently, a UV adhesive X2 is applied between: the transmission optical waveguide 5 and the reception optical waveguide 6 of the optical receiver element 3; and the end face of the glass block 7B having the output optical fiber F2 and input optical fiber F3 embedded therein. The glass block 7B is then brought into contact with the transmission optical waveguide 5 and the reception optical waveguide 6. Alignment of the optical axis of the output optical fiber F2 is then performed while appropriate polarized light is input from the output optical fiber F2, so that optical input power at the optical power meter M2 is maximized. At the same time, alignment of the optical axis of the input optical fiber F3 is performed while appropriate polarized light is input from the input optical fiber F3, so that photoelectric current in the first to fourth PDs 12 is maximized. Irradiating the UV adhesive X2 with UV light after the alignment of the optical axes optically connects, by butt joint coupling, and adhesively fixes the input optical fiber F3 and the reception optical waveguide 6 to each other, and the output optical fiber F2 and the transmission optical waveguide 5 to each other. For illustration purpose, in the above described example, the optical power meter M2 that condenses and receives light output from the end face of the X polarization inter-element waveguide 82B of the optical receiver element 3 is placed near the end face of the X polarization inter-element waveguide 82B. However, the optical power meter M2 that condenses and received light output from the end face of the Y polarization inter-element waveguide 83B of the optical receiver element 3 may be placed near the end face of the Y polarization inter-element waveguide 83B.

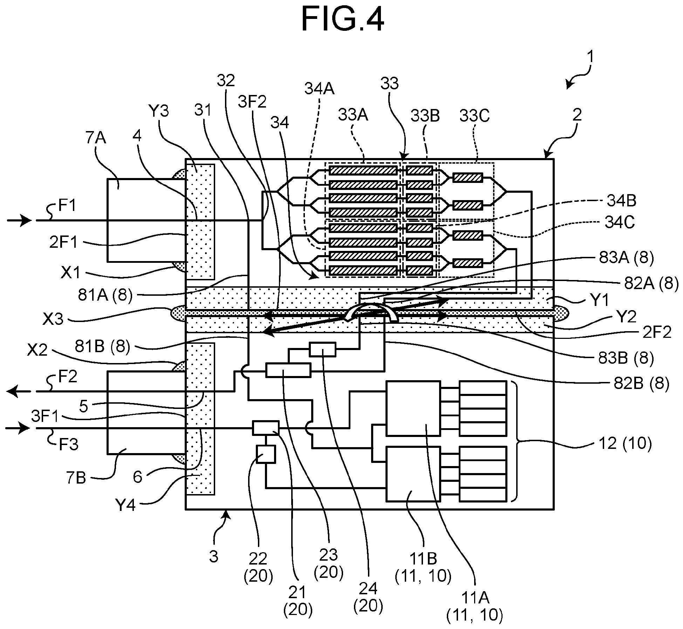

A method of optically connecting the optical modulator element 2 and the optical receiver element 3 to each other will be described next. FIG. 4 is a diagram illustrating an example of the method of optically connecting the optical modulator element 2 and the optical receiver element 3 to each other. The optical modulator element 2 having the local optical fiber F1 optically connected thereto and the optical receiver element 3 having the input optical fiber F3 and output optical fiber F2 optically connected thereto are prepared.

A UV adhesive X3 is applied between the second end face 2F2 of the optical modulator element 2 and the fourth end face 3F2 of the optical receiver element 3. The second end face 2F2 and the fourth end face 3F2 are then brought into contact with each other so that the end faces of the local inter-element waveguides 81A and 81B are connected to each other, the end faces of the X polarization inter-element waveguides 82A and 82B are connected to each other, and the end faces of the Y polarization inter-element waveguides 83A and 83B are connected to each other. After the second end face 2F2 and the fourth end face 3F2 have been brought into contact with each other, appropriate local light is input from the local optical fiber F1 optically connected to the optical modulator element 2. Alignment of at least any one of the optical axis of the optical modulator element 2 or the optical axis of the optical receiver element 3 is performed while the local light is input, so that optical power from the output optical fiber F2 of the optical receiver element 3 is maximized. At the same time, alignment of at least any one of the optical axis of the optical modulator element 2 or the optical axis of the optical receiver element 3 is performed, so that photoelectric current in the first to fourth PDs 12 is maximized.

After the alignment of the optical axes, the UV adhesive X3 applied between the second end face 2F2 and the fourth end face 3F2 is irradiated with UV light. As a result, the end faces of the local inter-element waveguides 81A and 81B are optically connected, by butt joint coupling, and adhesively fixed to each other, the end faces of the X polarization inter-element waveguides 82A and 82B are optically connected, by butt joint coupling, and adhesively fixed to each other, and the end faces of the Y polarization inter-element waveguides 83A and 83B are optically connected, by butt joint coupling, and adhesively fixed to each other.

Because a perovskite-type oxide theoretically having a DC drifting property is used as the electro-optic material for the optical modulator element 2 in the optical device 1 according to the embodiment, a DC power source that supplies DC voltage for DC drift compensation is to be used.

The optical modulator element 2 made of the electro-optic material, which enables ultrahigh speed optical modulators to be designed, and the optical receiver element 3 that is a Si photonic element, which enables ultrahigh speed reception to be designed, are used in the optical device 1 according to the first embodiment. For example, application to ultrahigh speed uses of a baud rate of 96 Gbaud/second or higher is possible. What is more, because the optical receiver 10 and the polarization element 20, which are Si photonic elements that have already been put to practical use, are integrated with the optical receiver element 3, downsizing is enabled as compared with conventional bulk-type polarization elements. Furthermore, the inter-element waveguide 8 of the optical modulator element 2 and the inter-element waveguide 8 of the optical receiver element 3 having the polarization element 20 installed therein are optically connected to each other by butt joint coupling. As a result, fabrication is facilitated without any special integration process for integrating an electro-optic material having an electro-optic effect onto a Si photonic element. What is more, because the optical modulator element 2 using the electro-optic material that improves properties and the optical receiver element 3 that is a Si photonic element favorable to downsizing are optically connected to each other, properties of the optical device 1 are able to be improved and the optical device 1 is able to be downsized.

The adhesive fixing between the optical modulator element 2 and the optical receiver element 3 may be modified as appropriate to be reinforced and the optical modulator element 2 and the optical receiver element 3 may thus be adhesively fixed to a substrate made of, for example, Si, with a comparatively soft adhesive. Furthermore, using the fixtures Y1 and Y2 for the optical device 1 facilitates the butt joint coupling between the optical modulator element 2 and the optical receiver element 3. This may be modified as appropriate, and the fixtures Y1 and Y2 may be not used.

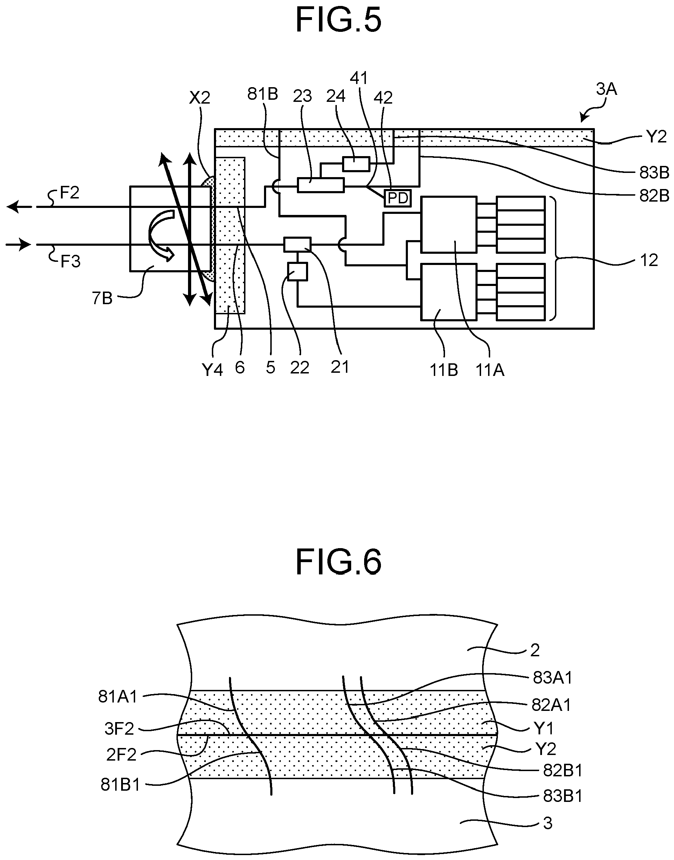

For illustration purpose, in the above described example, the optical power meter M2 that condenses and receives light output from the end face of the X polarization inter-element waveguide 82B of the optical receiver element 3 is placed near the end face of the X polarization inter-element waveguide 82B. However, without being limited to this example, any other modification may be made as appropriate. FIG. 5 is a diagram illustrating an example of a method of optically connecting an optical receiver element 3A to an output optical fiber F2 and an input optical fiber F3. The optical receiver element 3A illustrated in FIG. 5 has an optical branch portion 41 arranged on an X polarization inter-element waveguide 82B and a monitor PD 42 connected to the optical branch portion 41. The monitor PD 42 is a PD including Si and Ge.

Subsequently, a UV adhesive X2 is applied between: a transmission optical waveguide 5 and a reception optical waveguide 6 of the optical receiver element 3A; and an end face of a glass block 7B having the output optical fiber F2 and input optical fiber F3 embedded therein. The glass block 7B is then brought into contact with the transmission optical waveguide 5 and the reception optical waveguide 6. While appropriate polarized light is input from the output optical fiber F2, power of signal light branched at the optical branch portion 41 is detected by use of the monitor PD 42. Alignment of the optical axis of the output optical fiber F2 is then performed so that the photoelectric current of the signal light is maximized. At the same time, alignment of the optical axis of the input optical fiber F3 is performed while appropriate polarized light is input from the input optical fiber F3, so that the photoelectric current in the first to fourth PDs 12 is maximized. Irradiating the UV adhesive X2 with UV light after the alignment of the optical axes optically connects, by butt joint coupling, and adhesively fixes the input optical fiber F3 and the reception optical waveguide 6 to each other and the output optical fiber F2 and the transmission optical waveguide 5 to each other. In the case of FIG. 5, alignment of the optical axes between the input optical fiber F3 and the reception optical waveguide 6 and between the output optical fiber F2 and the transmission optical waveguide 5 is achieved even without the use of the optical power meter M2.

FIG. 6 is a diagram illustrating an example of a junction of the inter-element waveguide 8 in the optical modulator element 2 and the inter-element waveguide 8 in the optical receiver element 3. The end face of the local inter-element waveguide 81A1 at the optical modulator element 2 and the end face of the local inter-element waveguide 81B1 at the optical receiver element 3 may be optically connected to each other, by butt joint coupling, diagonally at about 5 to 15 degrees to a line normal to the second end face 2F2 and fourth end face 3F2. In this case, optical coupling of reflected light generated at the end faces between the local inter-element waveguides 81A1 and 81B1 to local light guided through the local inter-element waveguide 81A1 is able to be reduced.

The end face of the X polarization inter-element waveguide 82A1 at the optical modulator element 2 and the end face of the X polarization inter-element waveguide 82B1 at the optical receiver element 3 may be optically connected to each other, by butt joint coupling, diagonally at about 5 to 15 degrees to a line normal to the second end face 2F2 and fourth end face 3F2. In this case, optical coupling of reflected light generated at the end faces between the X polarization inter-element waveguides 82A1 and 82B1 to X polarization component signal light guided through the X polarization inter-element waveguide 82A1 is able to be reduced.

The end face of the Y polarization inter-element waveguide 83A1 at the optical modulator element 2 and the end face of the Y polarization inter-element waveguide 83B1 at the optical receiver element 3 may be optically connected to each other, by butt joint coupling, diagonally at about 5 to 15 degrees to a line normal to the second end face 2F2 and fourth end face 3F2. In this case, optical coupling of reflected light generated at the end faces between the Y polarization inter-element waveguides 83A1 and 83B1 to Y polarization component signal light guided through the Y polarization inter-element waveguide 83A1 is able to be reduced.

In the above described example of the optical device 1 illustrated in FIG. 6, the end faces of the local inter-element waveguides 81A1 and 81B1 are optically connected to each other, the end faces of the X polarization inter-element waveguides 82A1 and 82B1 are optically connected to each other, and the end faces of the Y polarization inter-element waveguides 83A1 and 83B1 are optically connected to each other, each diagonally to a normal line. However, without being limited to this example, any other modification may be made as appropriate.

Furthermore, in the above described example of the optical device 1, the end faces of the inter-element waveguide 8 are optically connected, by butt joint coupling, diagonally at about 5 to 15 degrees to a normal line and influence of reflected light generated at the end faces is thereby reduced. However, a spot size converter (SSC) may be arranged at the end faces of the local inter-element waveguides 81A and 81B, the end faces of the X polarization inter-element waveguides 82A and 82B, and the end faces of the Y polarization inter-element waveguides 83A and 83B. The SSC enlarges the optical mode field diameter.

The SCC arranged at the end faces of the local inter-element waveguides 81A and 81B may be of the uptapered type that gradually increases in optical waveguide width or thickness toward an end face or the downtapered type that gradually decreases in optical waveguide width or thickness toward an end face. Designing the SSC of the downtapered type so that light spreads out from the waveguide enables enlargement of the optical mode field diameter. As a result, optical coupling loss upon butt joint coupling of the local inter-element waveguides 81A and 81B to each other is able to be reduced and positional tolerance of the waveguide upon butt joint coupling is able to be increased.

The SCC arranged at the end faces of the X polarization inter-element waveguides 82A and 82B may be of the uptapered type that gradually increases in optical waveguide width or thickness toward an end face or the downtapered type that gradually decreases in optical waveguide width or thickness toward an end face. As a result, optical coupling loss upon butt joint coupling of the X polarization inter-element waveguides 82A and 82B to each other is able to be reduced and positional tolerance of the waveguide upon butt joint coupling is able to be increased.

The SCC arranged at the end faces of the Y polarization inter-element waveguides 83A and 83B may be of the uptapered type that gradually increases in optical waveguide width or thickness toward an end face or the downtapered type that gradually decreases in optical waveguide width or thickness toward an end face. As a result, optical coupling loss upon butt joint coupling between the Y polarization inter-element waveguides 83A and 83B is able to be reduced and positional tolerance of the waveguide upon butt joint coupling is able to be increased.

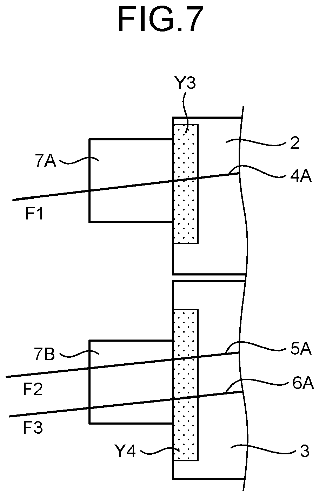

FIG. 7 is a diagram illustrating an example of a junction of a local optical waveguide 4A and a local optical fiber F1, a junction of a transmission optical waveguide 5A and an output optical fiber F2, and a junction of a reception optical waveguide 6A and an input optical fiber F3. The local optical waveguide 4A of an optical modulator element 2 and the local optical fiber F1 may be optically connected to each other, by butt joint coupling, diagonally at about 5 to 15 degrees to a line normal to a first end face 2F1 of the optical modulator element 2 and an end face of a glass block 7A. In this case, optical coupling of reflected light generated between the connected surfaces of the local optical waveguide 4A and local optical fiber F1 to local light guided therethrough is able to be reduced.

The transmission optical waveguide 5A of an optical receiver element 3 and the output optical fiber F2 may be optically connected to each other, by butt joint coupling, diagonally at about 5 to 15 degrees to a line normal to a third end face 3F1 of the optical receiver element 3 and an end face of a glass block 7B. In this case, optical coupling of reflected light generated between the connected surfaces of the transmission optical waveguide 5A and output optical fiber F2 to transmitted light guided therethrough is able to be reduced.

The reception optical waveguide 6A of the optical receiver element 3 and the input optical fiber F3 may be optically connected to each other, by butt joint coupling, diagonally at about 5 to 15 degrees to a line normal to the third end face 3F1 of the optical receiver element 3 and the end face of the glass block 7B. In this case, optical coupling of reflected light generated between the connected surfaces of the reception optical waveguide 6A and input optical fiber F3 to received light guided therethrough is able to be reduced.

In the above described example of an optical device 1 illustrated in FIG. 7, the optical connection between the local optical waveguide 4A and local optical fiber F1, between the transmission optical waveguide 5A and output optical fiber F2, and between the reception optical waveguide 6A and input optical fiber F3 is diagonal to the normal line. However, an SSC may be arranged between the local optical waveguide 4 and local optical fiber F1, between the transmission optical waveguide 5 and output optical fiber F2, and between the reception optical waveguide 6 and input optical fiber F3.

The SCC arranged between the local optical waveguide 4 and the local optical fiber F1 may be of the uptapered type that gradually increases in optical waveguide width or thickness toward an end face or the downtapered type that gradually decreases in optical waveguide width or thickness toward an end face. As a result, optical coupling loss upon butt joint coupling between the local optical waveguide 4 and the local optical fiber F1 is able to be reduced and positional tolerance of the waveguide upon butt joint coupling is able to be increased.

The SCC arranged between the transmission optical waveguide 5 and the output optical fiber F2 may be of the uptapered type that gradually increases in optical waveguide width or thickness toward an end face or the downtapered type that gradually decreases in optical waveguide width or thickness toward an end face. As a result, optical coupling loss upon butt joint coupling between the transmission optical waveguide 5 and the output optical fiber F2 is able to be reduced and positional tolerance of the waveguide upon butt joint coupling is able to be increased.

The SCC arranged between the reception optical waveguide 6 and the input optical fiber F3 may be of the uptapered type that gradually increases in optical waveguide width or thickness toward an end face or the downtapered type that gradually decreases in optical waveguide width or thickness toward an end face. As a result, optical coupling loss upon butt joint coupling between the reception optical waveguide 6 and the input optical fiber F3 is able to be reduced and positional tolerance of the waveguide upon butt joint coupling is able to be increased.

In the above described example of the optical device 1 according to the first embodiment, the optical modulator element 2 has the four RF MZMs 33A and 34A, four DC slave MZMs 33B and 34B, and two DC master MZMs 33C and 34C that have been built therein. However, the four RF MZMs 33A and 34A may include an electro-optic material, and the four DC slave MZMs 33B and 34B and two DC master MZMs 33C and 34C may be Si photonic elements. Such an embodiment will hereinafter be described as a second embodiment.

### (b) Second Embodiment

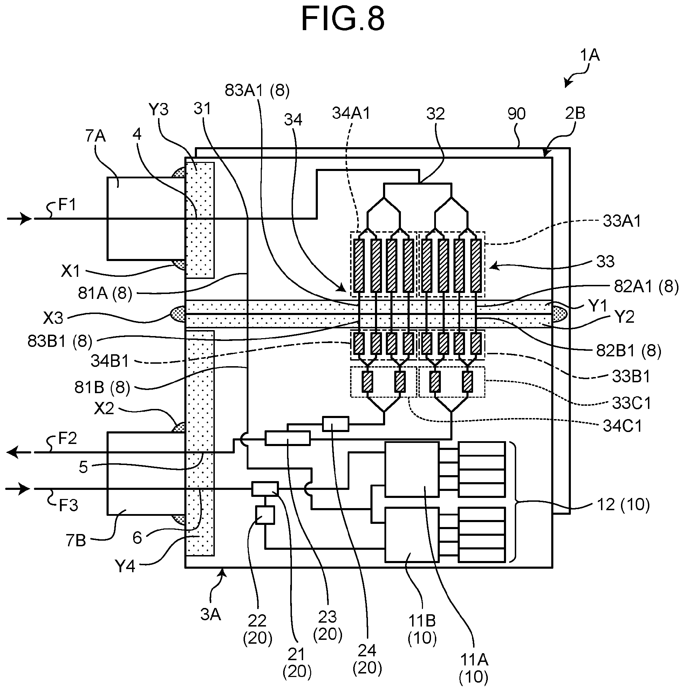

FIG. 8 is a schematic plan view of an example of an optical device 1A according to the second embodiment. By assignment of the same reference signs to components that are the same as those of the optical device 1 according to the first embodiment, description of the same components and operation thereof will be omitted. The optical device 1A according to the second embodiment is different from the optical device 1 according to the first embodiment in that DC slave MZMs 33B1 and 34B1 and DC master MZMs 33C1 and 34C1 have been built in an optical receiver element 3A. An optical modulator element 2B has a local optical waveguide 4, four RF MZMs 33A1 and 34A1, one local inter-element waveguide 81A, four X polarization inter-element waveguides 82A1, and four Y polarization inter-element waveguides 83A1. The four RF MZMs 33A1 and 34A1 have two RF MZMs 33A1 in an X polarization modulator 33 and two RF MZMs 34A1 in a Y polarization modulator 34.

The optical receiver element 3A has four X polarization inter-element waveguides 82B1 instead of the single X polarization inter-element waveguide 82B, and four Y polarization inter-element waveguides 83B1 instead of the single Y polarization inter-element waveguide 83B. Furthermore, the optical receiver element 3A has four DC slave MZMs 33B1 and 34B1 and two DC master MZMs 33C1 and 34C1 connected to the DC slave MZMs 33B1 and 34B1.

The four DC slave MZMs 33B1 and 34B1 have two DC slave MZMs 33B1 that are connected to the four X polarization inter-element waveguides 82B1 and that are in the X polarization modulator 33. Furthermore, the four DC slave MZMs 33B1 and 34B1 have two DC slave MZMs 34B1 that are connected to the four Y polarization inter-element waveguides 83B1 and that are in the Y polarization modulator 34. The two DC master MZMs 33C1 and 34C1 have a DC master MZM 33C1 in the X polarization modulator 33 and a DC master MZM 34C1 in the Y polarization modulator 34.

In the optical receiver element 3A, the DC master MZM 33C1 in the X polarization modulator 33 is connected to a PBC 23 and the DC master MZM 34C1 in the Y polarization modulator 34 is connected to a second PR 24.

The above described DC slave MZMs 33B and 34B and DC master MZMs 33C and 34C according to the first embodiment include an electro-optic material and thus implement phase adjustment by use of an electro-optic effect that changes the refractive index by application of voltage. However, the DC slave MZMs 33B1 and 34B1 and DC master MZMs 33C1 and 34C1, according to the second embodiment, are formed of Si photonic elements and thus implement phase adjustment by use of a thermos-optical effect that change the refractive index by temperature change. Therefore, a heater (not illustrated in the drawings), such as Ti or TiN, for example, is formed on surfaces of the DC slave MZMs 33B1 and 34B1 and DC master MZMs 33C1 and 34C1, the surfaces being near the optical waveguides, and feeding electric current to the heater increases the temperatures and adjusts the refractive indices, that is, the phases.

A method of manufacturing the optical device 1A according to the second embodiment will be described next. Joining of a local optical fiber F1 to the optical modulator element 2B in the manufacturing method will be described first. A fixture Y1 is arranged on and adhered to the local inter-element waveguide 81A, four X polarization inter-element waveguides 82A1, and four Y polarization inter-element waveguides 83A1 that are near a second end face 2F2 of the optical modulator element 2B. A first end face 2F1 and the second end face 2F2 of the optical modulator element 2B are cut and polished and end faces of the local inter-element waveguide 81A, four X polarization inter-element waveguides 82A1, four Y polarization inter-element waveguides 83A1, and local optical waveguide 4 are thereby formed into optical surfaces.

Subsequently, an optical power meter M1 that condenses and receives light output from the end face of the local inter-element waveguide 81A of the optical modulator element 2B is placed near the end face of the local inter-element waveguide 81A. Subsequently, a UV adhesive X1 is applied between the local optical waveguide 4 of the optical modulator element 2B and an end face of a glass block 7A having the local optical fiber F1 embedded therein and the glass block 7A is then brought into contact with the local optical waveguide 4. Alignment of the optical axis of the local optical fiber F1 is performed while light is input from the local optical fiber F1, so that optical input power at the optical power meter M1 is maximized, and the UV adhesive X1 is irradiated with UV light after the alignment of the optical axis. As a result, the local optical fiber F1 and the local optical waveguide 4 of the optical modulator element 2B are optically connected, by butt joint coupling, and adhesively fixed to each other.

Joining of an input optical fiber F3 and an output optical fiber F2 to the optical receiver element 3A in the manufacturing method will be described next. A fixture Y2 is arranged on and adhered to the local inter-element waveguide 81B, four X polarization inter-element waveguides 82B1, and four Y polarization inter-element waveguides 83B1 that are near a fourth end face 3F2 of the optical receiver element 3A. A third end face 3F1 and the fourth end face 3F2 of the optical receiver element 3A are then cut and polished. End faces of the local inter-element waveguide 81B, the four X polarization inter-element waveguides 82B1, the four Y polarization inter-element waveguides 83B1, a transmission optical waveguide 5, and a reception optical waveguide 6 are thereby formed into optical surfaces.

Subsequently, an optical power meter M2 that condenses and receives light output from the end faces of the four X polarization inter-element waveguides 82B1 of the optical receiver element 3A is placed near the end faces of the four X polarization inter-element waveguides 82B1. A UV adhesive X2 is applied between: the transmission optical waveguide 5 and the reception optical waveguide 6 of the optical receiver element 3A; and an end face of a glass block 7B having the output optical fiber F2 and input optical fiber F3 embedded therein, and the glass block 7B is then brought into contact with the transmission optical waveguide 5 and the reception optical waveguide 6. Alignment of the optical axis of the output optical fiber F2 is then performed while appropriate polarized light is input from the output optical fiber F2, so that optical input power at the optical power meter M2 is maximized. At the same time, alignment of the optical axis of the input optical fiber F3 is performed while appropriate polarized light is input from the input optical fiber F3, so that photoelectric current in first to fourth PDs 12 is maximized. Irradiating the UV adhesive X2 with UV light after the alignment of the optical axes optically connects, by butt joint coupling, and adhesively fixes the input optical fiber F3 and the reception optical waveguide 6 to each other and the output optical fiber F2 and the transmission optical waveguide 5 to each other. For illustration purpose, in the above described example, the optical power meter M2 that condenses and receives light output from the end faces of the four X polarization inter-element waveguides 82B1 of the optical receiver element 3A is placed near the end faces of the four X polarization inter-element waveguides 82B1. However, the optical power meter M2 that condenses and receives light output from the end faces of the four Y polarization inter-element waveguides 83B1 of the optical receiver element 3A may be placed near the end faces of the four Y polarization inter-element waveguides 83B1.

Furthermore, for illustration purpose, in the above described example, the optical power meter M2 that condenses and receives light output from the end faces of the X polarization inter-element waveguides 82B1 of the optical receiver element 3A is placed near the end faces of the X polarization inter-element waveguides 82B1. However, without being limited to this example, any other modification may be made as appropriate.

Optical connection of the optical modulator element 2B and the optical receiver element 3A to each other in the manufacturing method will be described next. The optical modulator element 2B having the local optical fiber F1 optically connected thereto and the optical receiver element 3A having the input optical fiber F3 and output optical fiber F2 optically connected thereto are prepared.

A UV adhesive X3 is applied between the second end face 2F2 of the optical modulator element 2B and the fourth end face 3F2 of the optical receiver element 3A. The second end face 2F2 and the fourth end face 3F2 are then brought into contact with each other so that the end faces of the local inter-element waveguides 81A and 81B are connected to each other, the end faces of the four X polarization inter-element waveguides 82A1 and 82B1 are connected to each other, and the end faces of the four Y polarization inter-element waveguides 83A1 and 83B1 are connected to each other. After the second end face 2F2 and the fourth end face 3F2 have been brought into contact with each other, appropriate local light is input from the local optical fiber F1 optically connected, by butt joint coupling, to the optical modulator element 2B. Alignment of at least any one of the optical axis of the optical modulator element 2B or the optical axis of the optical receiver element 3A is performed while the local light is input, so that optical power from the output optical fiber F2 at the optical receiver element 3A is maximized. At the same time, alignment of at least any one of the optical axis of the optical modulator element 2B or the optical axis of the optical receiver element 3A is performed so that photoelectric current in the first to fourth PDs 12 is maximized.

The UV adhesive X3 applied between the second end face 2F2 and fourth end face 3F2 is irradiated with UV light after the alignment of the optical axes. The end faces of the local inter-element waveguides 81A and 81B are then optically connected and adhesively fixed to each other, the end faces of the four X polarization inter-element waveguides 82A1 and 82B1 are then optically connected and adhesively fixed to each other, and the end faces of the four Y polarization inter-element waveguides 83A1 and 83B1 are then optically connected and adhesively fixed to each other.

The optical device 1A according to the second embodiment has the optical modulator element 2B having the four RF MZMs 33A1 and 34A1 that include an electro-optic material, and the optical receiver element 3A having the four DC slave MZMs 33B1 and 34B1 and the two DC master MZMs 33C1 and 34C1 that are Si photonic elements. The end faces of the local inter-element waveguides 81A and 81B are then optically connected to each other by butt joint coupling, the end faces of the four X polarization inter-element waveguides 82A1 and 82B1 are then optically connected to each other by butt joint coupling, and the end faces of the four Y polarization inter-element waveguides 83A1 and 83B1 are then optically connected to each other by butt joint coupling. As a result, properties of the optical device 1A are able to be improved and the optical device 1A is able to be downsized.

Furthermore, even if a perovskite-type oxide theoretically having a DC drifting property is used as the electro-optic material for the optical modulator element 2B in the optical device 1A according to the second embodiment, only the RF voltage is applied to the RF MZMs 33A1 and 34A1 and no DC voltage is applied to the RF MZMs 33A1 and 34A1. Therefore, theoretically, DC drifting does not occur. Furthermore, DC drifting theoretically does not occur either in the DC slave MZMs 33B1 and 34B1 and DC master MZMs 33C1 and 34C1 that include Si waveguides and heaters. Therefore, even if, for example, a perovskite-type oxide, such as LiNbO₃, which causes a comparatively large DC drift, is used for the optical modulator element 2B, a DC power source that supplies DC voltage for DC drift compensation is unnecessary. That is, the optical device 1A according to the second embodiment is even more favorable than the optical device 1 according to the first embodiment.

In the optical device 1 according to the first embodiment, the local optical waveguide 4 in the optical modulator element 2 and the local optical fiber F1 are optically connected to each other. Furthermore, in the above described example of the optical device 1, the transmission optical waveguide 5 in the optical receiver element 3 and the output optical fiber F2 are optically connected to each other, and the reception optical waveguide 6 in the optical receiver element 3 and the input optical fiber F3 are optically connected to each other. However, an optical fiber array including a local optical fiber F1, an output optical fiber F2, and an input optical fiber F3 may be adopted instead, and such an embodiment will hereinafter be described as a third embodiment.

### (c) Third Embodiment

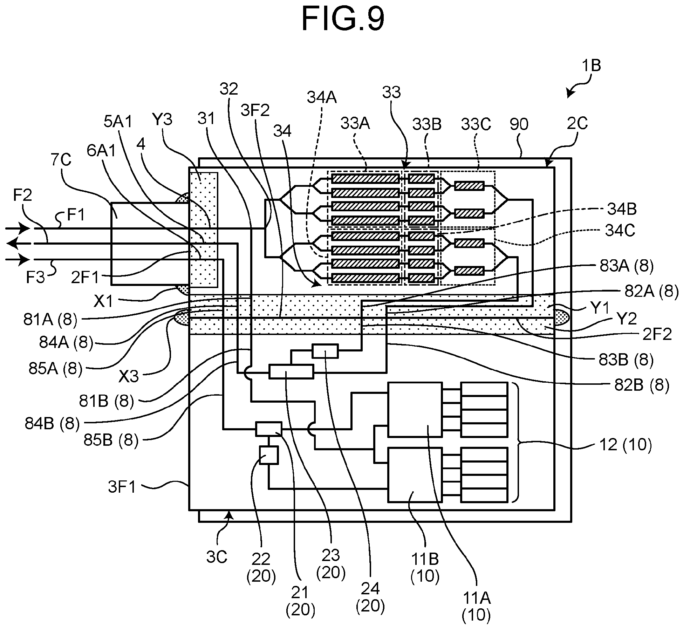

FIG. 9 is a schematic plan view of an example of an optical device 1B according to the third embodiment. By assignment of the same reference signs to components that are the same as those of the optical device 1 according to the first embodiment, description of the same components and operation thereof will be omitted. For the optical device 1B according to the third embodiment, an optical fiber array having a local optical fiber F1, an input optical fiber F3, and an output optical fiber F2 embedded in the same glass block 7C is adopted. For the optical device 1B, these optical fibers in the glass block 7C are optically connected respectively, by butt joint coupling, to optical waveguides in a first end face 2F1 of an optical modulator element 2C.

The optical modulator element 2C has a local optical waveguide 4, a transmission optical waveguide 5A1, a reception optical waveguide 6A1, a local inter-element waveguide 81A, an X polarization inter-element waveguide 82A, a Y polarization inter-element waveguide 83A, a transmission inter-element waveguide 84A, and a reception inter-element waveguide 85A.

The local optical waveguide 4 is an optical waveguide optically connected to the local optical fiber F1 in the optical fiber array, the optical waveguide extending to the first end face 2F1. The transmission optical waveguide 5A1 is an optical waveguide optically connected to the output optical fiber F2 in the optical fiber array, the optical waveguide extending to the first end face 2F1. The reception optical waveguide 6A1 is an optical waveguide optically connected to the input optical fiber F3 in the optical fiber array, the optical waveguide extending to the first end face 2F1.

The transmission inter-element waveguide 84A is an optical waveguide optically connected to the transmission optical waveguide 5A1, the optical waveguide extending to a second end face 2F2. The reception inter-element waveguide 85A is an optical waveguide optically connected to the reception optical waveguide 6A1, the optical waveguide extending to the second end face 2F2.

An optical receiver element 3C has a local inter-element waveguide 81B, an X polarization inter-element waveguide 82B, a Y polarization inter-element waveguide 83B, a transmission inter-element waveguide 84B, and a reception inter-element waveguide 85B.

The local inter-element waveguide 81B is optically connected to the local optical waveguide 4 connected to a first optical hybrid circuit 11A and a second optical hybrid circuit 11B. The local inter-element waveguide 81B is an optical waveguide optically connected to the local inter-element waveguide 81A in the optical modulator element 2C by butt joint coupling, the optical waveguide extending to a fourth end face 3F2.

The transmission inter-element waveguide 84B is an optical waveguide optically connected to a PBC 23 and optically connected, by butt joint coupling, to the transmission inter-element waveguide 84A in the optical modulator element 2C, the optical waveguide extending to the fourth end face 3F2. The reception inter-element waveguide 85B is an optical waveguide optically connected to a PBS 21 and optically connected, by butt joint coupling, to the reception inter-element waveguide 85A in the optical modulator element 2C, the optical waveguide extending to the fourth end face 3F2.

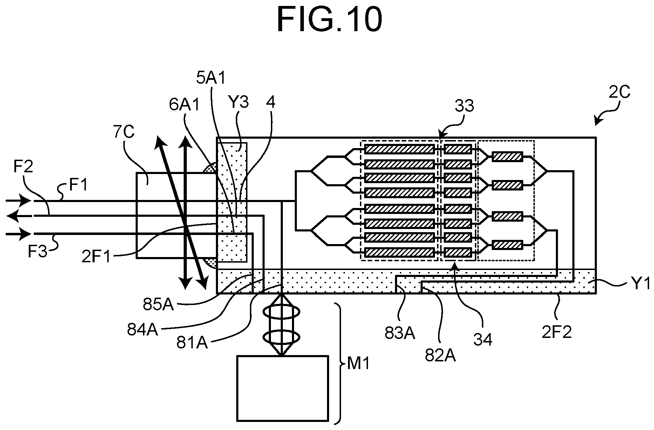

A method of manufacturing the optical device 1B according to the third embodiment will be described next. A method of optically connecting the optical fiber array to the optical modulator element 2C will be described first. FIG. 10 is a diagram illustrating an example of the method of optically connecting the optical fiber array to the optical modulator element 2C. A fixture Y1 is arranged on and adhered to the local inter-element waveguide 81A, the transmission inter-element waveguide 84A, the reception inter-element waveguide 85A, the X polarization inter-element waveguide 82A, and the Y polarization inter-element waveguide 83A that are near the second end face 2F2 of the optical modulator element 2C. Furthermore, a fixture Y3 is arranged on and adhered to the local optical waveguide 4, the transmission optical waveguide 5A1, and the reception optical waveguide 6A1 that are near the first end face 2F1 of the optical modulator element 2C.

The first end face 2F1 and second end face 2F2 of the optical modulator element 2C are then cut and polished. End faces of the local inter-element waveguide 81A, the transmission inter-element waveguide 84A, the reception inter-element waveguide 85A, the X polarization inter-element waveguide 82A, the Y polarization inter-element waveguide 83A, the local optical waveguide 4, the transmission optical waveguide 5A1, and the reception optical waveguide 6A1 are then formed into optical surfaces. Furthermore, an end face of the glass block 7C having the optical fiber array embedded therein is polished and end faces of the local optical fiber F1, input optical fiber F3, and output optical fiber F2 are formed into optical surfaces.

Subsequently, an optical power meter M1 that condenses and receives light output from the end face of the local inter-element waveguide 81A in the optical modulator element 2C is placed near the end face of the local inter-element waveguide 81A. For illustration purpose, in the above described example, the optical power meter M1 is arranged near the end face of the local inter-element waveguide 81A, but the optical power meter M1 may be arranged near the end face of the transmission inter-element waveguide 84A instead. In this case, the optical power meter M1 condenses and receives light output from the end face of the transmission inter-element waveguide 84A. Furthermore, the optical power meter M1 may be arranged near the end face of the reception inter-element waveguide 85A, and in this case, the optical power meter M1 condenses and receives light output from the end face of the reception inter-element waveguide 85A.

Subsequently, a UV adhesive X1 is applied between: the local optical waveguide 4, the transmission optical waveguide 5A1, and the reception optical waveguide 6A1 of the optical modulator element 2C; and the end face of the glass block 7C of the optical fiber array. The end face of the glass block 7C of the optical fiber array is then brought into contact with the local optical waveguide 4, the transmission optical waveguide 5A1, and the reception optical waveguide 6A1. Alignment of the optical axis of the local optical fiber F1 is performed while light is input from the local optical fiber F1, so that optical input power at the optical power meter M1 is maximized. At the same time, alignment of the optical axis of the output optical fiber F2 is performed while light is input from the output optical fiber F2, so that optical input power at the optical power meter M1 is maximized. At the same time, alignment of the optical axis of the input optical fiber F3 is performed while light is input from the input optical fiber F3, so that optical input power at the optical power meter M1 is maximized.

The UV adhesive X1 is then irradiated with UV light after the alignment of the optical axes of the local optical fiber F1, input optical fiber F3, and output optical fiber F2. As a result, the local optical fiber F1 and the local optical waveguide 4 are optically connected, by butt joint coupling, and adhesively fixed to each other, the input optical fiber F3 and the reception optical waveguide 6A1 are optically connected, by butt joint coupling, and adhesively fixed to each other, and the output optical fiber F2 and the transmission optical waveguide 5A1 are optically connected, by butt joint coupling, and adhesively fixed to each other.

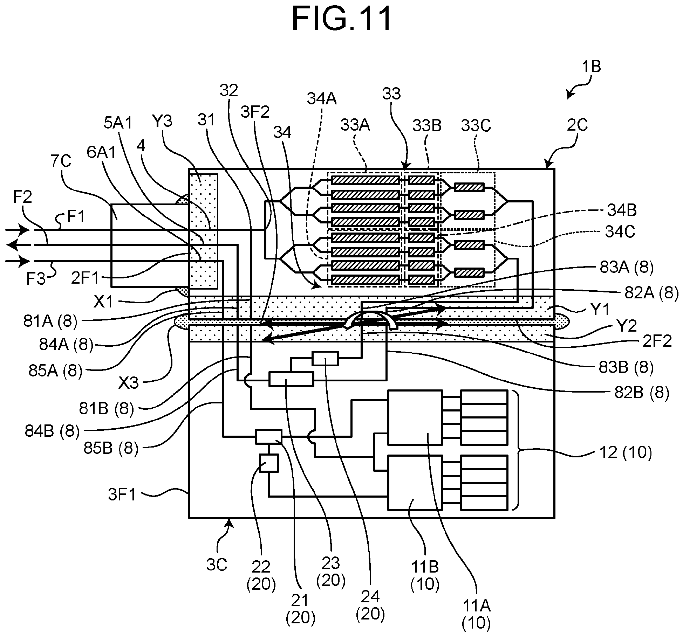

Optical connection of the optical modulator element 2C and the optical receiver element 3C to each other in the manufacturing method will be described next. FIG. 11 is a diagram illustrating an example of a method of optically connecting the optical modulator element 2C and the optical receiver element 3C to each other. The optical modulator element 2C having the local optical fiber F1, input optical fiber F3, and output optical fiber F2 in the optical fiber array optically connected thereto, and the optical receiver element 3C are prepared.

A UV adhesive X3 is applied between the second end face 2F2 of the optical modulator element 2C and the fourth end face 3F2 of the optical receiver element 3C. The second end face 2F2 and the fourth end face 3F2 are brought into contact with each other so that the end faces of the local inter-element waveguides 81A and 81B are connected to each other, the end faces of the transmission inter-element waveguides 84A and 84B are connected to each other, the end faces of the reception inter-element waveguides 85A and 85B are connected to each other, the end faces of the X polarization inter-element waveguides 82A and 82B are connected to each other, and the end faces of the Y polarization inter-element waveguides 83A and 83B are connected to each other.

After the second end face 2F2 and the fourth end face 3F2 have been brought into contact with each other, appropriate local light is input from the local optical fiber F1 that has been optically connected to the optical modulator element 2C by butt joint coupling. Alignment of at least any one of the optical axis of the optical modulator element 2C or the optical axis of the optical receiver element 3C is then performed while the local light is input, so that optical power from the output optical fiber F2 of the optical modulator element 2C is maximized. At the same time, alignment of at least any one of the optical axis of the optical modulator element 2C or the optical axis of the optical receiver element 3C is performed so that photoelectric current in the first to fourth PDs 12 is maximized.

The UV adhesive X3 applied between the second end face 2F2 and fourth end face 3F2 is irradiated with UV light after the alignment of the optical axes. The end faces of the local inter-element waveguides 81A and 81B are optically connected and adhesively fixed to each other, the end faces of the transmission inter-element waveguides 84A and 84B are optically connected and adhesively fixed to each other, the end faces of the reception inter-element waveguides 85A and 85B are optically connected and adhesively fixed to each other, the end faces of the X polarization inter-element waveguides 82A and 82B are optically connected and adhesively fixed to each other, and the end faces of the Y polarization inter-element waveguide 83A and 83B are optically connected and adhesively fixed to each other.

For the optical device 1B according to the third embodiment, the local optical fiber F1, output optical fiber F2, and input optical fiber F3 that are in the optical fiber array are optically connected to the first end face 2F1 of the optical modulator element 2C by butt joint coupling. As a result, the alignment of the optical axes of the optical fibers is performed just once by use of the optical fiber array, the throughput is thus improved, and further downsizing of optical transceivers is thus enabled.

For illustration purpose, in the example of the optical device 1B according to the third embodiment, the local optical fiber F1, the output optical fiber F2, and the input optical fiber F3 are optically connected, by butt joint coupling, to the first end face 2F1 of the optical modulator element 2C. However, another embodiment not limited to this example will hereinafter be described as a fourth embodiment.

### (d) Fourth Embodiment

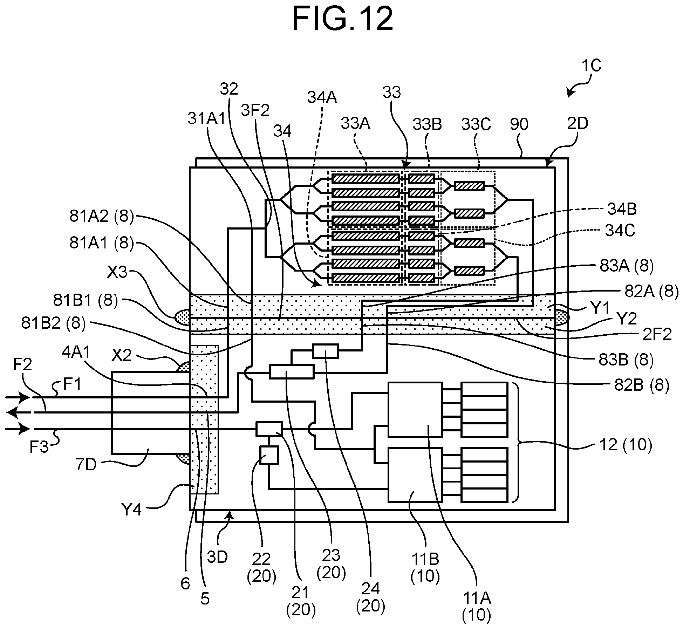

FIG. 12 is a schematic plan view of an example of an optical device 1C according to the fourth embodiment. By assignment of the same reference signs to components that are the same as those of the optical device 1 according to the first embodiment, description of the same components and operation thereof will be omitted. For the optical device 1C according to the fourth embodiment, an optical fiber array having a local optical fiber F1, an input optical fiber F3, and an output optical fiber F2 embedded in the same glass block 7D is adopted. For this optical device 1C, these optical fibers in the glass block 7D are optically connected respectively, by butt joint coupling, to optical waveguides in a third end face 3F1 of an optical receiver element 3D.

The optical receiver element 3D has a local optical waveguide 4A1, a transmission optical waveguide 5, a reception optical waveguide 6, local inter-element waveguides 81B1 and 81B2, an X polarization inter-element waveguide 82B, and a Y polarization inter-element waveguide 83B.

The local optical waveguide 4A1 is an optical waveguide optically connected to the local optical fiber F1 in the optical fiber array, the optical waveguide extending to the third end face 3F1. The transmission optical waveguide 5 is an optical waveguide optically connected to the output optical fiber F2 in the optical fiber array, the optical waveguide extending to the third end face 3F1. The reception optical waveguide 6 is an optical waveguide optically connected to the input optical fiber F3 in the optical fiber array, the optical waveguide extending to the third end face 3F1. The local inter-element waveguides 81B1 and 81B2 are optical waveguides optically connected to the local optical waveguide 4A1, the optical waveguide extending to a fourth end face 3F2.

An optical modulator element 2D has local inter-element waveguides 81A1 and 81A2, an X polarization inter-element waveguide 82A, a Y polarization inter-element waveguide 83A, and a first branch portion 31A1.

The local inter-element waveguide 81A1 is an optical waveguide optically connecting, by butt joint coupling, the first branch portion 31A1 and the local inter-element waveguide 81B1 in the optical receiver element 3D to each other, the optical waveguide extending to a second end face 2F2. The local inter-element waveguide 81A2 is an optical waveguide optically connecting, by butt joint coupling, the first branch portion 31A1 and the local inter-element waveguide 81B2 in the optical receiver element 3D to each other, the optical waveguide extending to the second end face 2F2. The first branch portion 31A1 is optically branched to a second branch portion 32 and the local inter-element waveguide 81A2.

The X polarization inter-element waveguide 82A is an optical waveguide optically connected to a PBC 23 and optically connected, by butt joint coupling, to the X polarization inter-element waveguide 82B in the optical receiver element 3D, the optical waveguide extending to the second end face 2F2. The Y polarization inter-element waveguide 83A is an optical waveguide optically connected to a second PR 24 and optically connected, by butt joint coupling, to the Y polarization inter-element waveguide 83B in the optical receiver element 3D, the optical waveguide extending to the second end face 2F2.

For the optical device 1C according to the fourth embodiment, the local optical fiber F1, output optical fiber F2, and input optical fiber F3 in the optical fiber array are optically connected, by butt joint coupling, to the third end face 3F1 of the optical receiver element 3D. As a result, alignment of the optical axes of the optical fibers is to be performed just once by use of the optical fiber array, the throughput is thus improved, and further downsizing of optical transceivers is thus enabled.

Furthermore, as compared with the optical device 1B according to the third embodiment, the optical device 1C according to the fourth embodiment enables reduction of loss by decrease in the number of inter-element waveguides 8 between the optical modulator element 2D and the optical receiver element 3D.

In the above described example of the optical device 1C illustrated in FIG. 12, the first branch portion 31A1 and the local inter-element waveguide 81A2 are arranged in the optical modulator element 2D and the local inter-element waveguide 81B2 in the optical receiver element 3D is optically connected via the local inter-element waveguide 81A2 from the first branch portion 31A1. However, a first branch portion may be arranged in the local inter-element waveguide 81B1 in the optical receiver element 3D and local light at the first branch portion may be optically branched to a first optical hybrid circuit 11A and a second optical hybrid circuit 11B. In this case, the local inter-element waveguide 81A2 and the first branch portion 31A1 in the optical modulator element 2D and the local inter-element waveguide 81B2 in the optical receiver element 3D will be unnecessary.

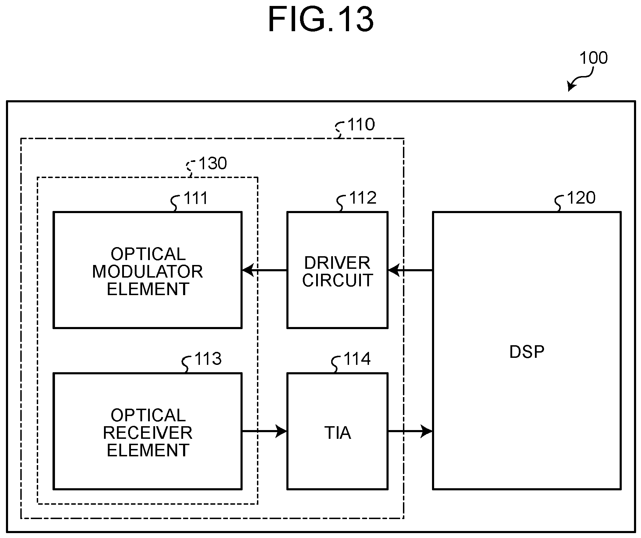

An optical transceiver 100 having the optical device 1 according to the embodiment adopted therein will be described next. FIG. 13 is a block diagram illustrating an example of the optical transceiver 100 according to an embodiment. The optical transceiver 100 illustrated in FIG. 13 has an optical transmitter and receiver 110 and a digital signal processor (DSP) 120. The optical transmitter and receiver 110 has a transmitter and receiver circuit 130, a driver circuit 112, and a transimpedance amplifier (TIA) 114. The transmitter and receiver circuit 130 has an optical modulator element 111 and an optical receiver element 113. The DSP 120 controls the overall optical transmitter and receiver 110. The DSP 120 is an electric component that executes digital signal processing for implementing IQ modulation processing of a transmitted signal and demodulation processing of a received signal.

The DSP 120 executes processing, such as encoding of transmitted data, generates an electric signal including the transmitted data, and outputs the electric signal generated, to the driver circuit 112, for example. The driver circuit 112 drives the optical modulator element 111 according to the electric signal from the DSP 120. The optical modulator element 111 optically modulates signal light.

The optical receiver element 113 performs electric conversion of signal light. The TIA 114 amplifies an electric signal resulting from the electric conversion and outputs the electric signal that has been amplified, to the DSP 120. The DSP 120 executes processing, such as decoding of the electric signal obtained from the TIA 114 to obtain received data. The optical modulator element 111 and the optical receiver element 113 form the optical device 1.

Examples of an electro-optic material that may be used for the optical modulator element 111 include (Pb) (Zr, Ti)O₃(PZT), (Pb,La) (Zr,Ti)O₃(PLZT), BaTiO₃(BTO), and (Sr,Ba)TiO₃(SBT). However, any other perovskite-type oxide having an electro-optic effect may be used as the electro-optic material. Other examples of the electro-optic material that may be used include III to V compound semiconductors, such as InGaAsP and AlGaAsP. In a case where a III-V compound semiconductor, such as InGaAsP or

AlGaAsP, is used, a thermoelectric cooler (TEC) is provided under the optical transmitter and receiver 110 because properties of the optical modulator tend to be influenced by temperature. In this case, a special moisture resistant TEC, to which a non-hermetic sealing structure can be applied, may be used.

In one aspect, downsizing is enabled, and properties are improved.
The disclosure extends to the following set of numbered statements:
S1. An optical module(130), comprising:
   an optical modulator element(111) including a first optical waveguide(4) extending to a first end face(2F1), a first inter-element waveguide(8) extending to a second end face(2F2), and an optical modulator(33,34) including an electro-optic material; and
   an optical receiver element(113) including a second optical waveguide(5,6) extending to a third end face(3F1), a second inter-element waveguide(8) extending to a fourth end face(3F2), an optical receiver(10), and a polarization element(20), wherein
   the first inter-element waveguide and the second inter-element waveguide have been connected to each other by being butted against each other.
S2. An optical transceiver(100), comprising:
   an optical modulator element(111) including a first optical waveguide(4) extending to a first end face, a first inter-element waveguide(8) extending to a second end face, and an optical modulator(33,34) including an electro-optic material;
   an optical receiver element(113) including a second optical waveguide(5,6) extending to a third end face, a second inter-element waveguide(8) extending to a fourth end face, an optical receiver(10), and a polarization element(20); and
   a processor(120) that executes signal processing for the optical modulator and the optical receiver, wherein
   the first inter-element waveguide and the second inter-element waveguide have been connected to each other by being butted against each other.

## Claims

1. An optical device(1), comprising:
an optical modulator element(2) including a first optical waveguide(4) extending to a first end face(2F1), a first inter-element waveguide(8) extending to a second end face(2F2), and an optical modulator(33,34) including an electro-optic material; and
an optical receiver element(3) including a second optical waveguide(5,6) extending to a third end face(3F1), a second inter-element waveguide(8) extending to a fourth end face(3F2), an optical receiver(10), and a polarization element(20), wherein
the first inter-element waveguide and the second inter-element waveguide have been connected to each other by being butted against each other.

2. The optical device according to claim 1, wherein the first end face(2F1) and the third end face(3F1) are coplanar with each other.

3. The optical device according to claim 1 or 2, wherein
the first optical waveguide(4) extending to the first end face(2F1) and a local optical fiber(F1) have been connected to each other by being butted against each other, and
an input optical fiber(F3) and an output optical fiber(F2), and the second optical waveguide extending to the third end face have been connected to each other by being butted against each other.

4. The optical device according to claim 1 or 2, wherein a local optical fiber(F1), an input optical fiber(F3), and an output optical fiber(F2), and the first optical waveguide extending to the first end face have been connected to each other by being butted against each other.

5. The optical device according to claim 1 or 2, wherein a local optical fiber(F1), an input optical fiber(F3), and an output optical fiber(F2), and the second optical waveguide extending to the third end face have been connected to each other by being butted against each other.

6. The optical device according to any of the preceding claims, wherein the optical modulator element(2) includes: an optical phase modulator(33A,34A) that performs phase modulation of signal light; and an optical phase adjuster(33B,34B,33C,34C) that adjusts a phase of the signal light that has been subjected to the phase modulation.

7. The optical device according to any of claims 1 to 5, wherein
the optical modulator element(2B) has an optical phase modulator(33A1,34A1) that performs phase modulation of signal light; and
the optical receiver element(3A) has an optical phase adjuster(33B1,34B1,33C1,34C1) that receives the signal light subjected to the phase modulation by the optical phase modulator through the first inter-element waveguide(82A1,83A1) and the second inter-element waveguide(82B1,83B1) and that adjusts a phase of the received signal light subjected to the phase modulation.

8. The optical device according to any of the preceding claims, wherein the electro-optic material is a perovskite-type oxide.

9. The optical device according to claim 8, wherein the perovskite-type oxide includes at least any one of (Pb) (Zr,Ti)O₃, (Pb,La)(Zr,Ti)O₃, BaTiO₃, (Sr,Ba)TiO₃, or LiNbO₃.

10. The optical device according to any of claims 1 to 7, wherein the electro-optic material is a III-V compound semiconductor.

11. The optical device according to any of the preceding claims, wherein a substrate having the optical modulator element(2) mounted on the substrate includes a material having an expansion coefficient that is approximately equal to an expansion coefficient of a Si substrate(90) of the optical receiver element.

12. The optical device according to any of the preceding claims, wherein the first inter-element waveguide and the second inter-element waveguide have been connected to each other by being butted against each other in a state where the first inter-element waveguide and the second inter-element waveguide have been inclined with respect to a line normal to the second end face and the fourth end face.

13. The optical device according to any of the preceding claims, wherein the first inter-element waveguide and the second inter-element waveguide have a spot size converter that optically couples the first inter-element waveguide and the second inter-element waveguide to each other, the spot size converter being an uptapered optical waveguide that gradually increases in waveguide width or thickness toward a connected end face or a downtapered optical waveguide that gradually decreases in waveguide width or thickness toward the connected end face.

14. An optical module(130), comprising:
the optical device of any of the preceding claims.

15. An optical transceiver(100), comprising:
the optical device of any of claims 1 to 13; and
a processor(120) that executes signal processing for the optical modulator and the optical receiver.
